Europäisches Patentamt

European Patent Office

Office européen des brevets

(11) Publication number: **0 238 194 B1**

# EUROPEAN PATENT SPECIFICATION

(45) Date of publication of patent specification: **13.05.92**

(51) Int. Cl.⁵: **G11B** 20/10, G11B 20/18, G11B 19/24, G11B 19/28, //G11B7/013

(21) Application number: **87301223.1**

(22) Date of filing: **12.02.87**

(54) **Methods of and apparatus for recording signals on a disc-shaped recording medium.**

(30) Priority: **18.02.86 JP 33322/86**

(43) Date of publication of application:
**23.09.87 Bulletin 87/39**

(45) Publication of the grant of the patent:
**13.05.92 Bulletin 92/20**

(84) Designated Contracting States:
**AT DE FR GB IT NL**

(56) References cited:
EP-A- 0 018 157      EP-A- 0 129 224
EP-A- 0 130 091      EP-A- 0 137 346
EP-A- 0 137 855      EP-A- 0 158 067
GB-A- 2 080 997      GB-A- 2 080 997
GB-A- 2 082 426      GB-A- 2 085 199
GB-A- 2 088 088      US-A- 4 355 338
US-A- 4 382 268

**PATENT ABSTRACTS OF JAPAN, vol. 9, no. 6
(P-326)[1729], 11th January 1985; & JP-A-59
154 612 (HITACHI SEISAKUSHO K.K.)
03-09-1984**

(73) Proprietor: **SONY CORPORATION
7-35 Kitashinagawa 6-Chome Shinagawa-ku
Tokyo 141(JP)**

(72) Inventor: **Sako, Yoichiro Patents Division
Sony Corporation 6-7-35 Kitashinagawa
Shinagawa-ku Tokyo 141(JP)**
Inventor: **Yamagami, Tamotsu Patents Division
Sony Corporation 6-7-35 Kitashinagawa
Shinagawa-ku Tokyo 141(JP)**
Inventor: **Yamamura, Shinichi Patents Division
Sony Corporation 6-7-35 Kitashinagawa
Shinagawa-ku Tokyo 141(JP)**

(74) Representative: **Pilch, Adam John Michael et
al
D. YOUNG & CO. 10 Staple Inn
London WC1V 7RD(GB)**

PATENT ABSTRACTS OF JAPAN, vol. 7, no. 238 (P-231)[1383], 22nd October 1983; & JP-A-58 125 209 (MITSUBISHI DENKI K.K.) 26-07-1983

PATENT ABSTRACTS OF JAPAN, vol. 9, no. 236 (P-390)[1959], 21st September 1985; & JP-A-60 89 861 (MITSUBISHI DENKI K.K.) 20-05-1985

PATENT ABSTRACTS OF JAPAN, vol. 9, no. 210 (P-383)[1933], 28th August 1985; & JP-A-60 70 505 (TRIO K.K.) 22-04-1985

PATENT ABSTRACTS OF JAPAN, vol. 9, no. 232 (P-389)[1955], 18th September 1985, page 111 P 389; & JP-A-60 87 405 (MATSUSHITA DENKI SANGYO K.K.) 17-05-1985

## Description

This invention relates to methods of and apparatus for recording signals on a disc-shaped recording medium, and in particular but not exclusively to such methods and apparatus suitable for optically recording time-sequential signals such as an audio signal and/or a video signal on such a recording medium.

A hard disc drive apparatus to be utilised for driving a disc-shaped recording medium is known, and a large quantity of data can be stored on this type of disc-shaped recording medium.

This hard disc drive apparatus is mainly used as a mass data storage device for computer processing. The disc-shaped recording medium arranged in the hard disc drive apparatus is driven at a predetermined rotational speed irrespective of the transmission rate of data to be recorded thereon. The data is magnetically recorded on cylindrical or annular tracks formed on the disc.

There has also been developed a technique to record data optically on a disc-shaped recording medium, for example, a so-called WORM (write once read many) disc or a MO (magneto-optical) disc. The WORM disc is exposed to a laser beam, the light intensity of which is changed in response to data to be recorded thereon so that a series of pits are formed on the WORM disc, thereby to record the data thereon. Data is recorded on the MO disc by applying a magnetic field having a predetermined magnitude to a magnetic film formed on the disc, and at the same time exposing the film to a laser beam whose light intensity is changed in response to the data to be recorded, thereby to control the magnetisation direction of the magnetic film with the result that the data is recorded magneto-optically on the MO disc.

In the case of a WORM disc, once data has been recorded thereon, it cannot be erased; on the other hand, data recorded on a MO disc can be erased. It is therefore possible in the case of the MO disc to record data again in the data recording region on which previously-recorded data has been erased.

A disc drive apparatus provided with a disc-shaped recording medium on which data is optically recorded can also be used as a mass data storage device for computer processing. Accordingly, the disc-shaped recording medium, on which the data is optically recorded, is rotated at a predetermined constant speed irrespective of the transmission rate of the data being supplied for recording by the disc drive apparatus.

There are a number of ways that time-sequential data can be generated and the transmission rate of such time-sequential data can differ from one source to another. Such time-sequential data can be, for example, an audio signal or video signal which is transmitted along a telephone line as digital data at a regulated standard transmission rate, for example at 1.536 Mbps in Japan and 2.048 Mbps in the European Community.

A compact disc (CD) player is an apparatus which reproduces an audio signal recorded on a compact disc as digital data. A so-called 8 mm video tape recorder (VTR) is an example of an apparatus which can transform an audio signal into a digital signal, record the transformed digital signal with a video signal on an 8 mm wide magnetic tape, and reproduce the recorded signals therefrom. Further, a digital audio tape recorder using rotary heads, referred to as a rotary head digital audio tape recorder (R-DAT) has been proposed which can record and reproduce an audio signal.

The sampling frequency of the audio signal for the CD player is set at 44.1 kHz, and the sampling frequency for reproducing the audio signal in the 8 mm VTR is about 31.5 kHz. In the case of the R-DAT recorder, it is possible to select a sampling frequency from the frequencies 32 kHz, 44.1 kHz, or 48 kHz in order to record and reproduce an audio signal. Furthermore, when an audio signal is sampled and then recorded, there is a variation in the quantitisation number or sampled data length, such as 8 bits, 12 bits, 16 bits, or the like, depending on the respective apparatus. As a result, the transmission rate of data to be reproduced by the respective apparatus differs from one apparatus to another.

UK Patent Application GB-A-2 080 997 discloses a technique for recording digital data which is adaptable for different data formats by recording in a control track a control signal which is indicative of the format being recorded in data tracks on a record medium. The control signal is used during playback to control the playback functions accordingly.

According to a first aspect of the invention there is provided apparatus for recording an input signal on one or more sectors of a disc-shaped recording medium having a plurality of sectors, the apparatus being selectively supplied with time-sequential data having one of a plurality of predetermined transmission rates, the apparatus comprising:

means for recognising each transmission rate of said time-sequential data and for outputting a corresponding signal;

rotational speed control means for controlling the rotational speed of said disc-shaped recording medium in response to said signal output from said data transmission rate recognising means;

means for generating an error correcting code for said time-sequential data to be recorded in said sectors so as to correct a possible error which may occur in said time-sequential data and for adding said error correcting code to said time-sequential data; and

recording signal generating means for converting said time-sequential data to which is added said error correcting code into a signal for recording in one or more sectors of said disc-shaped recording medium, said recording signal generating means including means for recording the recording signal on said disc-shaped recording medium whose rotation is controlled by said rotational speed control means in accordance with the data transmission rate of the time sequential data supplied to said apparatus;

characterised in that:

said means for recognising the data transmission rate of said time-sequential data is operable to extract clock information included in said time-sequential data and to recognise the data transmission rate on the basis of the extracted clock information; and

said recording signal generating means further includes means for recording an identification signal indicative of the data transmission rate in a directory allocated in a predetermined area of said disc-shaped recording medium.

According to a second aspect of the invention there is provided a method of recording an input signal on one or more sectors of a disc-shaped recording medium having a plurality of sectors, the method comprising the steps of:

supplying time-sequential data at one of a plurality of predetermined transmission rates;

generating an error correcting code for said time-sequential data for correcting a possible error which may occur in said time-sequential data;

adding said error correcting code to said time-sequential data;

converting said time-sequential data including said error correcting code into a signal for recording in one or more sectors of said disc-shaped recording medium;

recognising the transmission rate of said supplied time-sequential data and rotating said disc-shaped recording medium in accordance therewith; and

recording said recording signal in one or more sectors of said disc-shaped recording medium;

characterised in that:

clock information included in said time-sequential data is extracted therefrom and the transmission rate of said time-sequential data is recognised on the basis of the extracted clock information; and

an identification signal indicative of the data transmission rate is recorded in a directory allocated in a predetermined area of said disc-shaped recording medium.

In a preferred embodiment of the invention, to be described in more detail hereinafter, when time-sequential data such as an audio signal or video signal is to be optically recorded, the disc-shaped recording medium is rotated in response to the transmission rate of the data thereby to sequentially record the data in each sector formed on the recording medium.

The invention will now be described by way of example with reference to the accompanying drawings, in which:

Figure 1 is a block diagram showing a disc drive apparatus according to an embodiment of the invention;

Figures 2A and 2B are diagrams showing a sector format of a disc used in the disc drive apparatus shown in Figure 1;

Figure 3 is a diagram showing an arrangement of data stored in a data area of one sector shown in Figures 2A and 2B;

Figure 4 is a diagram showing a modification of the data arrangement shown in Figure 3; and

Figure 5 is a table showing the relationship between time-sequential data to be recorded on a disc, the transmission rate thereof, and the rotational speed of the disc corresponding to the transmission rate.

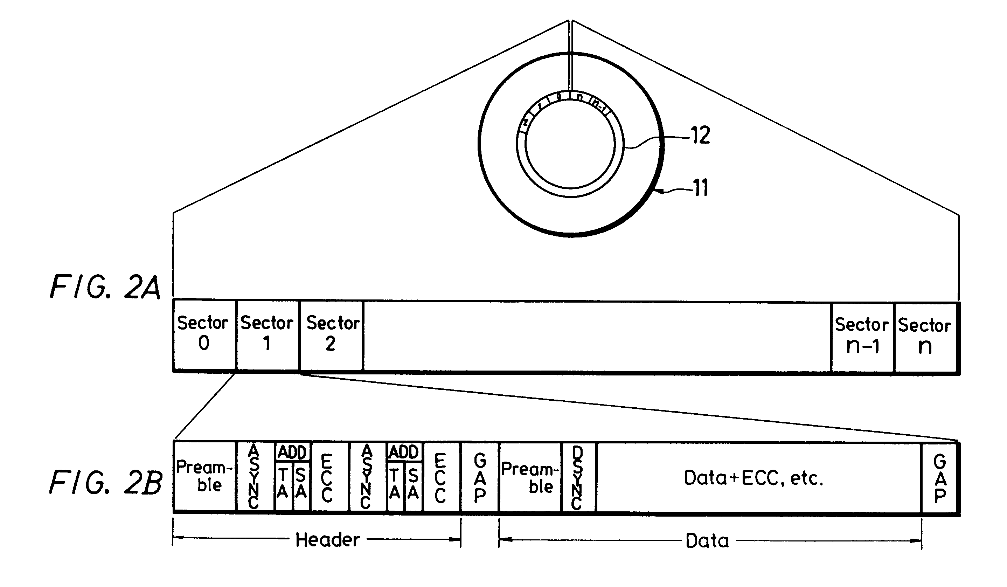

Figures 2A and 2B show a sector format of a magneto-optical disc used in an embodiment of the invention. A magneto-optical disc 11 has a track 12 annularly or cylindrically formed thereon. The track 12 is divided into a plurality of sectors. Data, including an error correcting code for correcting possible errors occurring in the data, and an error detecting code, are sequentially recorded in each sector on the magneto-optical disc 11. It can be seen from Figure 2A that one track 12 is formed on n + 1 sectors (0 to n), and in one embodiment, n is 31.

Figure 2B shows a practical example of the data format of each sector. Each sector comprises a header portion, a data portion, and gap portions GAP provided after each of the header and the data portions.

In the header portion, preamble data is recorded at the head thereof and following thereto there is recorded an address synchronising signal ASYNC for synchronising the address data on an address signal ADD comprising track address data TA and sector address data SA, followed by an error correcting code ECC for correcting possible errors in the address signal. In this example, the address synchronising signal ASYNC, the address signal ADD and the error correcting code ECC are formed twice in the header portion.

In the data portion, preamble data is recorded at the head, followed by a data synchronising signal DSYNC, and the data to be recorded on the magneto-optical disc with an error correcting code ECC for correcting possible errors in the data.

Figure 2A shows the tracks formed concentrically on the disc so that the disc can be used as a mass storage device for computer processing. However, it is preferable for use with embodiments of the present invention that the track be formed spirally on the disc. Such a spiral track can have a similar sector format to that discussed above for the concentric tracks.

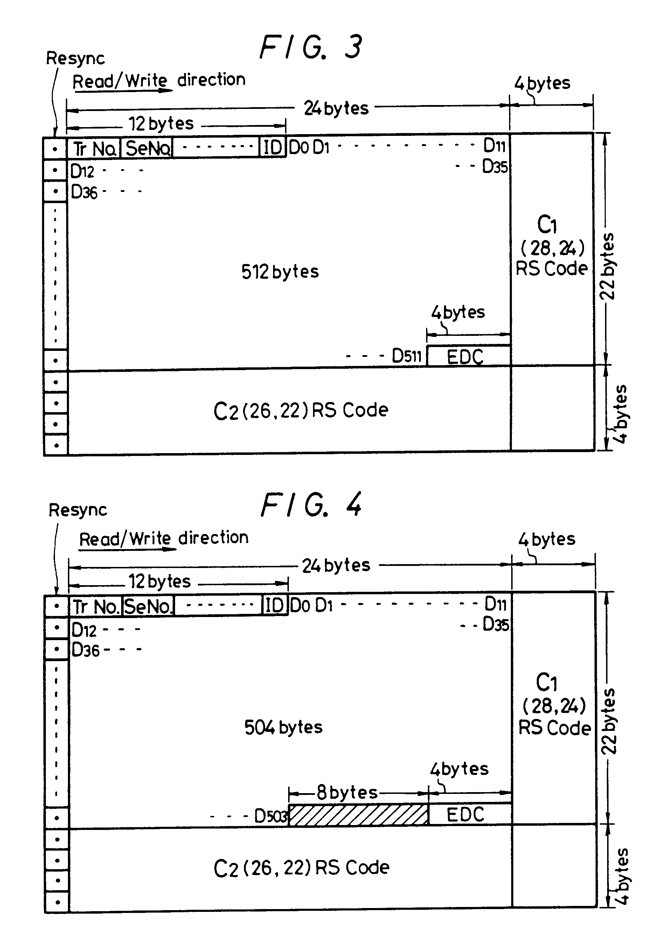

The preamble signal, the address synchronising signal ASYNC, the address signal ADD, and the error correcting code ECC recorded for the address signal ADD in the header portion, and/or the preamble signal and the data synchronising signal DSYNC in the data portion, can be previously recorded on the disc when the disc is manufactured, or alternatively can simultaneously be recorded with the data to be recorded on the data portion of the disc. The unit quantity of data to be recorded in the data portion of each sector is, in a widely-used format, determined to be 512 bytes, considering that the disc is used as a storage medium for a computer. Figure 3 shows a formation of the data portion for the above-mentioned case.

Referring to Figure 3, the quantity of information data to be recorded in each sector is 512 bytes, $D_0$ to $D_{511}$ as shown. Preceding the 512 bytes of data $D_0$ to $D_{511}$, there is additionally recorded 12 bytes of supplementary data comprising a track number TrNo, a sector number SeNo, and data identification information ID indicative of the classification of the data to be recorded in the sector. An error detecting code EDC, for example a 4-byte CRC (cyclic redundancy check) code is produced and added to the last portion of the 524 bytes of data described above. The 528 bytes of total data comprising the 12 bytes of supplementary data, the 512 bytes of data and the 4-byte error detecting code EDC, are sequentially arranged from the first column, first row, along the row direction thereby to form a rectangular array formed as a matrix having 2 rows and 24 columns. Then, a first error correcting code $C_1$ having 4 bytes, for example a (28,24) Reed-Solomon code, is produced and added to each 24 bytes of data arranged in the row direction of the rectangular array, and in the same manner a second error correcting code $C_2$, for example a (26,22) Reed-Solomon code, is produced and added to each column of data. At the head of each row of data there is recorded a synchronising signal Resync indicative of the head of each row, by which the data is sequentially recorded and read along the row direction.

An embodiment of the present invention will now be described, which records data having various transmission rates on a disc according to the above-described sector format, and reproduces the same from the disc.

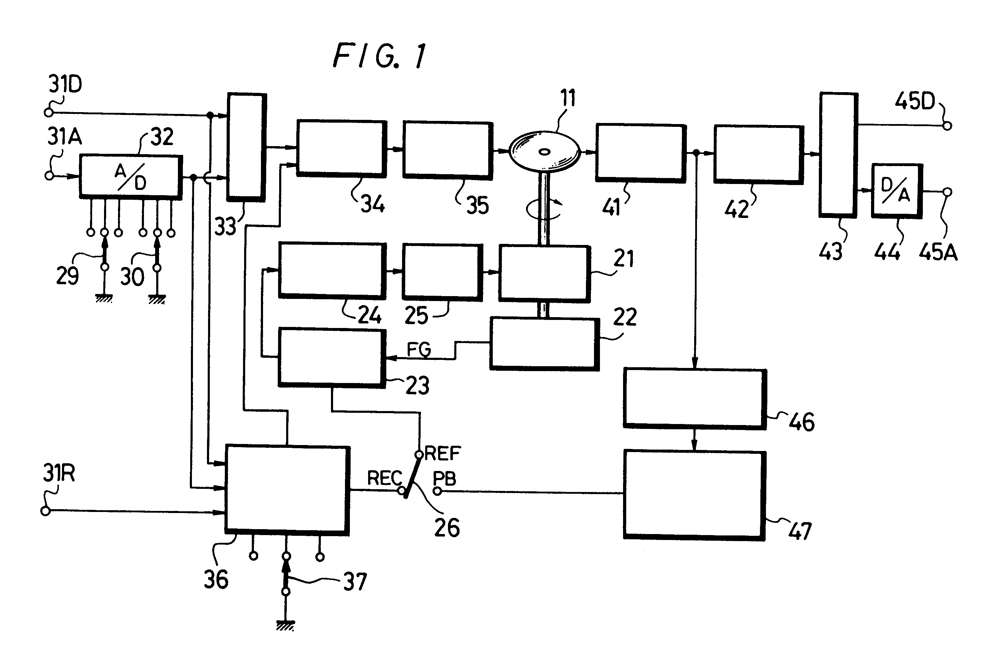

Figure 1 is a block diagram showing a disc drive apparatus which is arranged to carry out such recording and reproduction.

In Figure 1, a magneto-optical disc 11 is arranged to enable data recording to be made thereon, for example on a spiral track. A conventional recording and reproducing head (not shown) is used in the apparatus, with its tracking controlled such that, on playback, the head correctly scans the previously-recorded track.

A disc driving motor 21, by which the disc 11 is controlled so as to be rotated at a predetermined speed (that is, at a constant angular velocity) is provided with a frequency generator 22 which generates a frequency signal FG proportional to the rotational speed of the driving motor 21. The frequency signal FG is supplied to a phase comparator circuit 23. The phase comparator circuit 23 is also supplied with a speed control signal REF.

Although this speed control REF is varied according to the transmission rate of the data to be recorded or reproduced, as will be later described in detail, it has a frequency corresponding to that of the output signal FG from the frequency generator 22 when the disc 11 is rotated at an intended rotational speed. The speed control signal REF may be substituted by a signal that has a frequency obtained by dividing the frequency of the signal FG. In that case, the output signal FG should also be frequency-divided by the same dividing ratio before being supplied to the comparator circuit 23.

An output signal from the phase comparator circuit 23 indicative of the comparison result is integrated by an integrator circuit 24 to generate a speed error signal indicative of the difference between the speed reference signal and the actual rotational speed of the motor 21. Then, the speed error signal is fed back to the motor 21 through a motor drive circuit 25 so that the motor 21 is made to rotate at a constant speed corresponding to the speed control signal REF.

Reference is now made to the recording system part of the apparatus. In Figure 1, an input terminal 31D is provided to receive digital data such as data from a computer (not shown), or analog audio data which has been sampled at various predetermined sampling frequencies and supplied as time-sequential data. The data is sampled as one word formed of a predetermined number of bits. Therefore, digital data having various data transmission rates may be input to the input terminal 31D. The digital data input to the input terminal 31D is supplied to a data selector 33.

When time-sequential data is input to the digital input terminal 31D, in some cases a signal indicative of the transmission rate thereof may be transmitted therewith. In this case, the signal indicative of the transmission rate is supplied to an input terminal 31R.

An input terminal 31A is provided to receive an analog signal, for example an analog audio signal, an analog video signal, or the like. The analog signal input to the input terminal 31A is supplied to an analog-to-digital (A/D) converter 32 to be converted into a corresponding digital signal. The sampling frequency of the A/D converter 32 can be changed by a sampling frequency change-over switch 29 to various values, for examples 32 kHz, 44.1 kHz, 48 kHz and the like. Further, a quantitisation number change-over switch 30 is provided to select the length or bit number of one sample from various numbers of bits, for example 8 bits, 12 bits, 16 bits and the like. The digital signal from the A/D converter 32 is supplied to the data selector 33.

The data selector 33 selects, by either manual operation or a control signal supplied thereto from an external circuit (not shown), one of the digital signals from the input terminal 31D or from the A/D converter 32. The digital signal selected by the selector 33 is then supplied to an ECC encoder 34 for producing an error correcting code which is added to the rectangular array, wherein data is formed in the manner described above into a block to be recorded in one sector of the disc 11, namely a block containing 512 bytes of data.

If the data supplied to the ECC encoder 34 is digital data having an 8-bit length per one word, the data can be divided into 512-byte blocks of data to be recorded in each sector. When one word length is not 8 bits, but for example 12 bits, 16 bits, or the like, referring to Figure 3, one row cannot be formed of integer words, since one word may then extend over two rows, or two sectors, as the case may be. This inconvenience can be prevented by suitably changing the byte length or number in the row direction of the data matrix shown in Figure 3. Referring again to Figure 1, the data output from the ECC encoder 34, wherein the error correcting code is produced and added to the data, is supplied to a recording process circuit 35 to be suitably modulated, supplied to an optical pickup (not shown) in the form of serial data, and then recorded on the magneto-optical disc 11.

At this time, the rotational speed of the disc 11 must be controlled so as to be synchronised with the transmission rate of the digital data to be recorded. This is done by changing a mode switch 26 over to a recording side terminal REC so that the signal generated from a speed control signal generator circuit 36 is supplied to the phase comparator circuit 23 as the speed control signal REF.

If the time-sequential data to be recorded from the input terminal 31D is so-called self-clocking type digital data signal, the data from the input terminal 31D is supplied to the speed control signal generator circuit 36, wherein the clock signal included in the data is extracted therefrom, the transmission rate thereof is detected on the basis of the clock signal, and a speed control signal REF corresponding to the calculated transmission rate is generated by and delivered from the circuit 36 to the phase comparator circuit 23.

If the time-sequential data supplied to the input terminal 31D is not of the self-clocking type, but instead, a signal indicative of the transmission rate of the data such as a clock signal is sent separately from the data, the signal indicative of the transmission rate is supplied via the input terminal 31R to the speed control signal generator circuit 36 which generates a speed control signal corresponding to the transmission rate obtained from the signal indicative of the transmission rate.

If an analog signal is supplied to the input terminal 31A, a switch 37 is changed over according to the aforementioned sampling frequency and a bit number of one word length is selected, so that a speed control signal corresponding to the transmission rate is generated by the speed control signal generator circuit 36.

Let is be assumed that the time-sequential data input to the input terminal 31D is one whose transmission rate is previously known and which is not a self-clocking type signal, and that a signal indicative of the transmission rate is not transmitted. In such a case, a speed control signal corresponding to the known transmission rate can be manually selected by the switch 37.

The motor 21 is driven in a manner such that the phase (frequency) of the speed control signal REF corresponding to the transmission rate thus obtained and that of the frequency signal FG generated by the frequency generator 22 coincide with each other, and accordingly the disc 11 is rotated at a rotational speed in correspondence with the transmission rate of the input data.

In this case, the signal corresponding to the transmission rate of the data from the signal generator circuit 36 is also supplied to the ECC encoder 34 and the identification signal indicative of the transmission rate is recorded on the disc 11 as a portion of the data identification information ID in the supplementary data of the data structure shown in Figure 3. Also recorded as a portion of the data identification information ID in the supplementary data are the sampling frequency and the bit number forming one word length of the data.

Incidentally, if the time-sequential data supplied to the input terminal 31D is encoded data to which is added a parity and other redundancy bits, the data is first decoded to be only inherent digital data.

The magneto-optical disc has a large capacity, so that the data may contain redundancy bits. In this case, however, the transmission rate may be varied a little. It is therefore required to change the rotational speed of the disc 11 in response to variation in the transmission rate.

Further, the identification information ID indicative of the transmission rate of the data to be recorded in each sector may be recorded in a directory area which is allocated at a predetermined area provided, for example, in the innermost track or the outermost track of the disc.

Furthermore, the sampling frequency and word length of sampled data with which the analog/digital conversion is effected by the A/D converter 32 may also be recorded in this directory to be used when the data is reproduced.

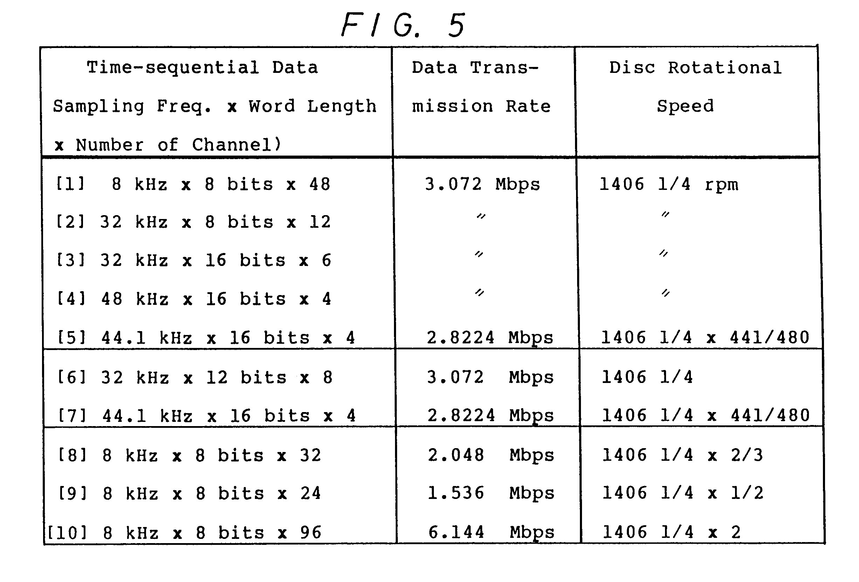

Figure 5 is a table showing the relationship between input data assumed to be used in actual practice, the transmission rate thereof and the rotational speed of the disc corresponding to the transmission rate. Examples (1) to (5) in the table relate to data for cases in which an audio signal which may include a voice signal is to be recorded on the disc. Example (1) relates to data when a voice signal is recorded on the disc and the sampling frequency is set to 8 kHz, the word length or quantitisation number of one sample is set to 8 bits, and the channel number for the signal to be recorded is 48 channels. In the same manner, Examples (2) to (5) relate to data for audio signals such as music signals or the like. In particular, Example (4) relates to time-sequential data output from the aforementioned R-DAT apparatus, and Example (5) relates to data output from a CD player. The transmission rate of the digital data in Examples (1) to (4) is 3.072 Mbps, and that of the digital data in Example (5) is 2.8224 Mbps. The driving motor for the disc is controlled so that the disc is rotated, for example at $1406\frac{1}{4}$ rpm (revolutions per minute) or $1406\frac{1}{4}$ x 441/480 rpm, corresponding to the transmission rate. In this example, the quantity of data to be recorded in one sector is set to be 512 bytes and the number of sectors per rotation is 256.

Examples (6) and (7) relate to cases in which a broadcast signal is received via a satellite in the form of digital data, wherein the transmission rates thereof are respectively 3.072 Mbps and 2.8224 Mbps, and the disc is rotated at corresponding speeds.

Examples (8) to (10) show data for cases in which a digital signal, in the form of a sound or audio signal or the like, is transmitted along a telephone line. The transmission rate shown in Example (8), that is 2.048 Mbps, is a standard transmission rate used in Europe (EC), and those shown in Examples (9) and (10) are standard transmission rates used in Japan. The disc is rotated according to these transmission rates.

In each of these examples, the rotational speed of the disc 11 is varied as mentioned above; however, the total number of bits recorded on a disc is consistent. This is achieved by varying the recording time according to the transmission rate.

As is clear from Figure 5, the rotational speed of the disc can be changed from one value to another to accommodate the transmission rates of time-sequential data output from various types of audio apparatus or various standard transmission rates for digital data. Further, it is also possible to record the sound reproduced from a digital audio tape recorder on a disc without any modification.

Referring again to Figure 1, the reproducing system part of the apparatus will now be described. Time-sequential data is reproduced from the disc 11 by the optical pickup (not shown), and is supplied to a reproducing process circuit 41 to be demodulated. The output signal from the reproducing process circuit 41 is then supplied to an ID decoder 46 for the identification information ID. Decoded therein is the ID signal indicative of the transmission rate and the like recorded in the supplementary data area of each sector of the disc.

A speed control signal generator circuit 47 is supplied with the decoded signal indicative of the transmission rate from the ID decoder 46. The circuit 47 generates a speed control signal in accordance with the decoded transmission rate. The speed control signal is supplied in turn to the phase comparator circuit 23 through a playback side terminal PB of the switch 26, Thus, the disc 11 is rotated at a rotational speed in correspondence with the transmission rate of the recorded data.

When data indicative of the transmission rate and the like is recorded in the directory allocated in a predetermined area of the disc, the speed control signal for controlling the rotation of the disc upon playback can be generated by reading the data indicative of the transmission rate, prior to reproduction of the data.

The data thus reproduced at a rotational speed in correspondence with the data transmission rate is supplied to an ECC decoder 42 from the reproducing process circuit 41, wherein error correction processes and the like are carried out for the reproduced data with reference to units of each sector. The error corrected reproduced data is then converted to only inherent data, namely with redundancy data removed. If the reproduced data thus processed is to be output in the form of digital data, the data is delivered to an output terminal 45D via a multiplexer 43. If the reproduced data is to be output in the form of an analog signal, the data is supplied to a digital-to-analog (D/A) converter 44 to be converted into an analog signal before being delivered to an output terminal 45A.

The data required to effect D/A conversion in the D/A converter 44, namely the sampling frequency and the bit number of one word of data, can be determined by decoding the data identification information ID stored in the sector of the disc or reading the data recorded in the directory allocated in a predetermined area of the disc, and the D/A conversion can thereafter be carried out in response to the known data.

The data indicative of the transmission rate, the sampling frequency, the word length of one sample and the like, may be recorded in a part of the header portion which is positioned ahead of the data portion in each sector.

In the above case, the driving motor 21, and therefore also the rotation of the disc 11, is controlled at a constant angular velocity. However, the above-described technique can be applied to the case where the driving motor 21 is controlled to rotate the disc 11 at a constant linear velocity which is changed in accordance with the transmission rate of the time-sequential data to be supplied.

Further, in the embodiment shown in Figure 1, the identification information ID is derived from the output of the reproducing process circuit 41. However, when the identification information ID is written in the supplementary data areas of the data arrangement as shown in Figure 3, the information ID can also be error-corrected by the use of the error correcting codes $C_1$ and $C_2$. Therefore, the system may be arranged such that the information ID is derived from the output of the ECC decoder 42. It is the same when the information ID is written in the header portion of the sector. In other word, since it is known where the identification information ID is written on the disc, the information ID can be read out either before or after the error correcting process.

The manner in which time-sequential data having different transmission rates can be recorded and reproduced without changing the rotational speed of the disc will now be described. It is not necessary to use the whole data area of one sector, namely all 512 bytes. By allocating the data number in accordance with the sampling frequency and the word length of the data to be recorded to each sector, data having different transmission rates can be recorded on a disc without changing the rotational speed of the disc.

In order to understand this method, let is be assumed that the rotational speed of the disc is $1406\frac{1}{4}$ rpm, and the data transmission rate is 3.072 Mbps. A pulse code modulated (PCM) audio signal of an 8 mm video tape recorder (VTR) may for example be specified as follows: the sampling frequency thereof is 31.5 kHz, the word length per one sample is 8 bits, and the number of transmission channels is 12. Then, the transmission rate is determined to be 3.024 Mbps, so that the PCM audio signal cannot be recorded and reproduced with a good matching state at the rotational speed of $1406\frac{1}{4}$ rpm. Therefore, to overcome this problem, the last 8 bytes in the usable 512 bytes of data in one sector, as indicated by the hatched area in Figure 4, is left unused; that is, the usable data area is made up of 504 bytes. The data area of the last 8 bytes may be filled with all "zeros" or "ones", or used as an area for writing parameters or the like. Since the 512 bytes of data comprises 4096 bits, and the number 4096 is not a multiple of 12, the 12-bit bytes of audio data cannot be allocated with good matching. However, if as mentioned above, the capacity of the data area is changed from 512 bytes to 504 bytes, the data area comprises 4032 bits. Since the number 4032 is a multiple of 12, 12 -bit data can be recorded and reproduced with good matching from each sector without a word (one sample) of data extending over two sectors.

The following advantage is effected by changing the byte number recordable in the data area of one sector from 512 bytes to 504 bytes. That is, two signals whose transmission rates are slightly different from each other corresponding to the sampling frequency thereof (for example a satellite broadcast signal whose sampling frequency is 32 kHz and a PCM audio signal for an 8 mm VTR whose sampling frequency is 31.5 kHz) can be recorded on the same disc without changing its rotational speed. The reason for this is that when the time-sequential data having a sampling frequency of 32 kHz is recorded in one sector whose capacity is 512 bytes and the time-sequential data having a sampling frequency of 31.5 kHz is recorded in one sector whose capacity is 504 bytes, the corresponding relationship 504/512 = 31.5/32 is established between the sector capacity ratio and the sampling frequency ratio.

Even though the capacity of a sector is changed from 512 bytes to 504 bytes, the CRC codes acting as the error detecting code EDC and the parities $C_1, C_2$ are produced for the complete data of 512 bytes including the unused last 8 bytes. To be specific, the 4-byte CRC code is produced for 524 bytes of data which includes 512 bytes of data and 12 bytes of supplementary data, and for the data of 528 bytes thus formed, the parities $C_1$, $C_2$ are produced. It is therefore possible to substantially record and reproduce data having different transmission rates, although the transmission rate of the data to be recorded on the disc is not changed, for example is always maintained at 3.072 Mbps. When the sampling frequency is changed from 32 kHz to 31.5 kHz or vice versa, it is necessary to correct the difference in the transmission rate, which correction is effected by, for example, a random access memory (RAM) provided in the ECC encoder and the ECC decoder.

Further, the information indicative of the quantity or byte number of the data recorded in one sector, for example the identification signal indicative of 512 bytes or 504 bytes, is recorded in the header portion or the supplementary data area in each sector as the identification signal ID. The same signal can also be recorded on a directory provided in a predetermined area of the innermost or the outermost track of the disc.

In the reproducing procedure, when, by previously detecting the signal indicative of the quantity or data byte number of recorded data from the data in each sector or the directory, the reproduced digital signal is obtained from the ECC decoder 42, only the byte number of the data recorded in one sector is read from the RAM, whereby the time-sequential data can be obtained at the original transmission rate.

A preferred embodiment of the invention has been described wherein a magneto-optical disc is used as the recording medium, but it should be apparent that the present invention is not limited thereto.

As described above, by recording a large quantity of time-sequential digital data on a recordable magneto-optical disc, it becomes possible to record over a long time period without signal deterioration. Further, the rotational speed of the disc is controlled in response to the transmission rate of the time-sequential data, so that time-sequential data having different transmission rates can be recorded on the same disc in real time. Also, since the rotational speed of the disc is increased as the transmission rate of the time-sequential digital data becomes higher, an error correcting code can be produced and added to the time-sequential digital data recorded in each sector, so as to prevent possible errors from occurring in the data, due for example to the fact that the intensity of light (when an optical disc is used) of the laser beam is decreased in inverse proportion to the increase in the rotational speed of the disc.

**Claims**

1.  Apparatus for recording an input signal on one or more sectors of a disc-shaped recording medium (11) having a plurality of sectors, the apparatus being selectively supplied with time-sequential data having one of a plurality of predetermined transmission rates, the apparatus comprising:
    means (36) for recognising each transmission rate of said time-sequential data and for outputting a corresponding signal (REF);
    rotational speed control means (23 to 25) for controlling the rotational speed of said disc-shaped recording medium (11) in response to said signal (REF) output from said data transmission rate recognising means (36);
    means (34) for generating an error correcting code (ECC) for said time-sequential data to be recorded in said sectors so as to correct a possible error which may occur in said time-sequential data and for adding said error correcting code (ECC) to said time-sequential data; and
    recording signal generating means (35) for converting said time-sequential data to which is added said error correcting code (ECC) into a signal for recording in one or more sectors of said disc-shaped recording medium (11), said recording signal generating means (35) including means for recording the recording signal on said disc-shaped recording medium (11) whose rotation is controlled by said rotational speed control means (23 to 25) in accordance with the data transmission rate of the time sequential data supplied to said apparatus;
    characterised in that:
    said means (36) for recognising the data transmission rate of said time-sequential data is operable to extract clock information included in said time-sequential data and to recognise the data transmission rate on the basis of the extracted clock information; and
    said recording signal generating means (35) further includes means for recording an identification signal (ID) indicative of the data transmission rate in a directory allocated in a predetermined area of said disc-shaped recording medium (11).

2.  Apparatus according to claim 1, wherein said means (36) for recognising the data transmission rate of said time-sequential data is also operable to recognise the data transmission rate by means of information which is supplied (31R) to said apparatus separately from said time-sequential data.

3. Apparatus according to claim 1 or claim 2, comprising analog-to-digital converting means (32) for converting time-sequential analog signals supplied to said apparatus into time-sequential digital data, wherein said means (36) for recognising the transmission rate of said time-sequential data is also operable to recognise the data transmission rate on the basis of the sampling frequency and the word length of one sample with which said time-sequential analog signal is converted into time-sequential digital data by said analog-to-digital converting means (32).

4. Apparatus according to claim 3, comprising switching means (29,30) for changing the sampling frequency and/or the word length of one sample in said analog-to-digital converting means (32).

5. Apparatus according to claim 3 or claim 4, comprising means (31D) for receiving time-sequential data, and data selecting means (33) for selecting as the time-sequential data to be error corrected and recorded either said received time-sequential data or said time-sequential analog data converted by said analog-to-digital converting means (32).

6. Apparatus according to any one of claims 1 to 5, wherein said rotational speed control means (23 to 25) is operable to drive the recording medium (11) at a constant angular velocity which is determined on the basis of the signal (REF) output from said means (36) for recognising the transmission rate.

7. Apparatus according to any one of claims 1 to 5, wherein said rotational speed control means (23 to 25) is operable to drive the recording medium (11) at a constant linear velocity which is determined on the basis of the signal (REF) output from said means (36) for recognising the transmission rate.

8. Apparatus according to any one of claims 1 to 5, wherein the rotational speed control means (23 to 25) is operable to rotate the disc-shaped recording medium (11) at a constant speed during the recording of one or more time-sequential data having different data transmission rates, the apparatus comprising means for changing the number of bytes of data of the signal to be recorded in each sector of the recording medium (11) as a function of the sampling frequency and the word length to be recorded in each sector.

9. Apparatus according to any one of the preceding claims, wherein said recording signal generating means (35) includes means for irradiating a beam of electromagnetic radiation on to the recording medium (11).

10. Apparatus according to claim 9, wherein said disc-shaped recording medium (11) is a magneto-optical disc on which said time-sequential data is magneto-optically recorded by the use of a laser beam.

11. Apparatus according to claim 9, wherein said disc-shaped recording medium is of a type on which said time-sequential data is recorded as a series of pits by a laser beam.

12. A method of recording an input signal on one or more sectors of a disc-shaped recording medium (11) having a plurality of sectors, the method comprising the steps of:
supplying time-sequential data at one of a plurality of predetermined transmission rates;
generating (34) an error correcting code (ECC) for said time-sequential data for correcting a possible error which may occur in said time-sequential data;
adding said error correcting code (ECC) to said time-sequential data;
converting (35) said time-sequential data including said error correcting code (ECC) into a signal for recording in one or more sectors of said disc-shaped recording medium (11);
recognising (36) the transmission rate of said supplied time-sequential data and rotating (21) said disc-shaped recording medium (11) in accordance therewith; and
recording said recording signal in one or more sectors of said disc-shaped recording medium (11);
characterised in that:
clock information included in said time-sequential data is extracted therefrom and the transmission rate of said time-sequential data is recognised (36) on the basis of the extracted clock information; and
an identification signal (ID) indicative of the data transmission rate is recorded in a directory allocated in a predetermined area of said disc-shaped recording medium (11).

13. A method according to claim 12, wherein the recording step comprises irradiating a laser beam, whose intensity is modulated with the recording signal, on said disc-shaped medium (11) thereby to record said time-sequential data on said disc-shaped recording medium (11).

## Revendications

1. Appareil pour enregistrer un signal d'entrée dans un ou plusieurs secteurs d'un support d'enregistrement en forme de disque (11) comportant une pluralité de secteurs, l'appareil recevant sélectivement des données séquentielles dans le temps ayant un d'une pluralité de débits de transmission prédéterminés, l'appareil comprenant:

un moyen (36) pour identifier chaque débit de transmission desdites données séquentielles dans le temps et pour sortir un signal correspondant (REF);

un moyen de réglage de vitesse de rotation (23 à 25) pour régler la vitesse de rotation dudit support d'enregistrement en forme de disque (11) en réponse audit signal (REF) en sortie dudit moyen d'identification de débit de transmission de données (36);

un moyen (34) pour générer un code de correction d'erreurs (ECC) pour lesdites données séquentielles dans le temps à enregistrer dans lesdits secteurs de manière à corriger une erreur possible qui peut se produire dans lesdites données séquentielles dans le temps et pour ajouter ledit code de correction d'erreurs (ECC) auxdites données séquentielles dans le temps; et

un moyen générateur de signaux d'enregistrement(35) pour convertir lesdites données séquentielles dans le temps auxquelles est ajouté ledit code de correction d'erreurs (ECC) en un signal pour un enregistrement dans un ou plusieurs secteurs dudit support d'enregistrement en forme de disque (11), ledit moyen générateur de signaux d'enregistrement (35) incluant un moyen pour enregistrer le signal d'enregistrement sur ledit support d'enregistrement en forme de disque (11) dont la rotation est réglée par ledit moyen de réglage de vitesse de rotation (23 à 25) selon le débit de transmission de données des données séquentielles dans le temps fournies audit appareil;
caractérisé en ce que:

ledit moyen (36) pour identifier le débit de transmission de données desdites données séquentielles dans le temps peut être rendu actif pour extraire des informations d'horloge incluses dans lesdites données séquentielles dans le temps et pour identifier le débit de transmission de données en fonction des informations d'horloge extraites; et

ledit moyen générateur de signaux d'enregistrement (35) comprend en outre un moyen pour enregistrer un signal d'identification (ID) indiquant le débit de transmission de données dans un répertoire affecté dans une zone prédéterminée dudit support d'enregistrement en forme de disque (11).

2. Appareil selon la revendication 1, dans lequel ledit moyen (36) pour identifier le débit de transmission de données desdites données séquentielles dans le temps est également rendu actif pour identifier le débit de transmission de données au moyen d'informations qui sont fournies (31R) audit appareil séparément desdites données séquentielles dans le temps.

3. Appareil selon l'une quelconque des revendications 1 et 2, comprenant un moyen convertisseur d'analogique en numérique (32) pour convertir les signaux analogiques séquentiels dans le temps fournis audit appareil en données numériques séquentielles dans le temps, dans lequel ledit moyen (36) pour identifier le débit de transmission desdites données séquentielles dans le temps peut être également rendu actif pour identifier le débit de transmission de données en fonction de la fréquence d'échantillonnage et de la longueur d'un mot d'un échantillon par lequel ledit signal analogique séquentiel dans le temps est converti en données numériques séquentielles dans le temps par ledit moyen convertisseur analogique-numérique (32).

4. Appareil selon la revendication 3, comprenant un moyen commutateur (29,30) pour changer la fréquence d'échantillonnage et/ou la longueur d'un mot d'un échantillon dans ledit moyen convertisseur analogique-numérique (32).

5. Appareil selon l'une quelconque des revendications 3 et 4, comprenant un moyen (31D) pour recevoir des données séquentielles dans le temps, et un moyen sélecteur de données (33) pour sélectionner comme données séquentielles dans le temps dont les erreurs doivent être corrigées et à enregistrer soit lesdites données séquentielles dans le temps reçues, soit lesdites données analogiques séquentielles dans le temps converties par ledit moyen convertisseur analogique-numérique (32).

6. Appareil selon l'une quelconque des revendications 1 à 5, dans lequel ledit moyen de réglage de vitesse de rotation (23 à 25) peut être rendu actif pour entraîner le support d'enregistrement (11) à une vitesse angulaire constante qui est déterminée en fonction du signal (REF) en sortie dudit moyen (36) pour identifier le débit de transmission.

7. Appareil selon l'une quelconque des revendications 1 à 5, dans lequel ledit moyen de réglage de vitesse de rotation (23 à 25) peut être rendu actif pour entraîner le support d'enregistrement (11) à une vitesse linéaire constante qui est déterminée en fonction du signal (REF) en sortie dudit moyen (36) pour identifier le débit de transmission.

8. Appareil selon l'une quelconque des revendications 1 à 5, dans lequel le moyen de réglage de vitesse de rotation (23 à 25) peut être rendu actif pour faire tourner le support d'enregistrement en forme de disque (11) à une vitesse constante pendant l'enregistrement d'une ou plusieurs données séquentielles dans le temps ayant différents débits de transmission de données, l'appareil comprenant un moyen pour changer le nombre de multiplets de données du signal à enregistrer dans chaque secteur du support d'enregistrement (11) en fonction de la fréquence d'échantillonnage et de la longueur d'un mot à enregistrer dans chaque secteur.

9. Appareil selon l'une quelconque des revendications 1 à 8, dans lequel ledit moyen générateur de signaux d'enregistrement (35) comprend un moyen pour propager un faisceau d'un rayonnement électromagnétique sur le support d'enregistrement (11).

10. Appareil selon la revendication 9, dans lequel ledit support d'enregistrement en forme de disque (11) est un disque magnéto-optique sur lequel lesdites données séquentielles dans le temps sont enregistrées magnétooptiquement en utilisant un faisceau laser.

11. Appareil selon la revendication 9, dans lequel ledit support d'enregistrement en forme de disque est d'un type sur lequel lesdites données séquentielles dans le temps sont enregistrées sous forme d'une série de microcuvettes au moyen d'un faisceau laser.

12. Méthode d'enregistrement d'un signal d'entrée dans un ou plusieurs secteurs d'un support d'enregistrement en forme de disque (11) comportant une pluralité de secteurs, la méthode comprenant les opérations qui consistent à:

fournir des données séquentielles dans le temps à un d'une pluralité de débits de transmission prédéterminés;

générer (34) un code de correction d'erreurs (ECC) pour lesdites données séquentielles dans le temps pour la correction d'une erreur possible qui peut se produire dans lesdites données séquentielles dans le temps;

ajouter ledit code de correction d'erreurs (ECC) auxdites données séquentielles dans le temps;

convertir (35) lesdites données séquentielles dans le temps incluant ledit code de correction d'erreurs (ECC) en un signal pour un enregistrement dans un ou plusieurs secteurs dudit support d'enregistrement en forme de disque (11);

identifier (36) le débit de transmission desdites données séquentielles dans le temps fournies et faire tourner (21)ledit support d'enregistrement en forme de disque (11) en fonction de celui-ci; et à

enregistrer ledit signal d'enregistrement dans un ou plusieurs secteurs dudit support d'enregistrement en forme de disque (11); caractérisé en ce que:

les informations d'horloge incluses dans lesdites données séquentielles dans le temps sont extraites de celles-ci et le débit de transmission desdites données séquentielles dans le temps est identifié (36) en fonction des informations d'horloge extraites; et

un signal d'identification (ID) indiquant le débit de transmission de données est enregistré dans un répertoire affecté dans une zone prédéterminée dudit support d'enregistrement en forme de disque (11).

13. Méthode selon la revendication 12, dans lequel l'opération d'enregistrement comprend la propagation d'un faisceau laser dont l'intensité est modulée avec le signal d'enregistrement, sur ledit support en forme de disque (11) pour l'enregistrement au moyen de celui-ci desdites données séquentielles dans le temps sur ledit support d'enregistrement en forme de disque (11).

**Patentansprüche**

1. Gerät zum Aufzeichnen eines Eingangssignals in einem oder mehreren Sektoren eines plattenförmigen Aufzeichnungsmediums (11) mit einer Mehrzahl von Sektoren, wobei dem Gerät selektiv zeitsequentielle Daten mit einer von mehreren vorbestimmten Übertragungsraten zugeführt werden,

mit einer Einrichtung (36) zum Ermitteln der einzelnen Übertragungsraten der zeitsequentiellen Daten und zur Ausgabe eines entsprechenden Signals (REF),

mit einer Einrichtung (23 bis 25) zur Steuerung der Drehgeschwindigkeit des plattenförmigen Aufzeichnungsmediums (11) in Abhängigkeit von dem von der Einrichtung (36) zum Ermitteln der Übertragungsrate ausgegebenen Signal (REF),

mit einer Generatoreinrichtung (34) zur Erzeugung eines Fehlerkorrekturcodes (ECC) für die in den Sektoren aufzuzeichnenden zeitsequentiellen Daten zum Korrigieren eines in den zeitsequentiellen Daten möglicherweise auftretenden Fehlers und zum Addieren dieser Fehlerkorrekturcodes (ECC) zu den zeitsequentiellen Daten,

sowie mit einer Aufzeichnungssignal-Generatoreinrichtung (35) zum Umwandeln der zeitsequentiellen Daten, zu denen der Fehlerkorrekturcode (ECC) addiert ist, in ein Aufzeichnungssignal zur Aufzeichnung in einem oder mehreren Sektoren des plattenförmigen Aufzeichnungsmediums (11),

wobei diese Aufzeichnungssignal-Generatoreinrichtung (35) eine Einrichtung zum Aufzeichnen des Aufzeichnungssignals auf dem plattenförmigen Aufzeichnungsmedium (11) besitzt, dessen Drehgeschwindigkeit durch die Einrichtung (23 bis 25) zur Drehgeschwindigkeitssteuerung in Abhängigkeit von der Übertragungsrate der dem Gerät zugeführten zeitsequentiellen Daten gesteuert wird, **dadurch gekennzeichnet,**

daß die Einrichtung (36) zum Ermitteln der Datenübertragungsrate der zeitsequentiellen Daten so betreibbar ist, daß sie eine in den zeitsequentiellen Daten enthaltene Taktinformation extrahiert und die Datenübertragungsrate auf der Basis dieser extrahierten Taktinformation ermittelt,

und daß die Aufzeichnungssignal-Generatoreinrichtung (35) ferner eine Einrichtung enthält zum Aufzeichnen eines für die Datenübertragungsrate kennzeichnenden Identifizierungssignals (ID) in einem zugewiesenen Verzeichnis in einem vorbestimmten Bereich des plattenförmigen Aufzeichnungsmediums (11).

2. Gerät nach Anspruch 1, bei dem die Einrichtung (36) zum Ermitteln der Datenübertragungsrate der zeitsequentiellen Daten außerdem so betreibbar ist, daß sie die Datenübertragungsrate mit Hilfe einer Information ermittelt, die dem Gerät getrennt von den zeitsequentiellen Daten zugeführt wird (31R).

3. Gerät nach einem der Ansprüche 1 oder 2, mit einer Analog-Digital-Wandlereinrichtung (32) zum Umwandeln von dem Gerät zugeführt zeitsequentiellen Analogsignalen in zeitsequentielle digitale Daten, wobei die Einrichtung (36) zum Ermitteln der Datenübertragungsrate der zeitsequentiellen Daten außerdem so betreibbar ist, daß sie die Datenübertragungsrate auf der Basis der Abtastfrequenz und der Wortlänge einer Abtastprobe erkennt, mit der die Analog-Digital-Wandlereinrichtung (32) das zeitsequentielle Analogsignal in zeitsequentielle digitale Daten umwandelt.

4. Gerät nach Anspruch 3, mit Schaltmitteln (29, 30) zum Ändern der Abtastfrequenz und/oder der Wortlänge einer Abtastprobe in der Analog-Digital-Wandlereinrichtung (32).

5. Gerät nach Anspruch 3 oder 5, mit einer Einrichtung (31D) zur Aufnahme von zeitsequentiellen Daten und mit einer Datenauswahleinrichtung (33), mittels der entweder die empfangenen zeitsequentiellen Daten oder die von der Analog-Digital-Wandlereinrichtung (32) umgewandelten zeitsequentiellen analogen Daten als diejenigen zeitsequentiellen Daten auswählbar sind, die einer Fehlerkorrektur zu unterwerfen und aufzuzeichnen sind.

6. Gerät nach einem der Ansprüche 1 bis 5, bei dem die Einrichtung zur Drehgeschwindigkeitssteuerung (23 bis 25) so betreibbar ist, daß sie das Aufzeichnungsmedium (11) mit konstanter Winkelgeschwindigkeit antreibt, die auf der Basis des von der Einrichtung (36) zum Ermitteln der Datenübertragungsrate ausgegebenen Signals (REF) bestimmt wird.

7. Gerät nach einem der Ansprüche 1 bis 5, bei dem die Einrichtung zur Drehgeschwindigkeitssteuerung (23 bis 25) so betreibbar ist, daß sie das Aufzeichnungsmedium (11) mit konstanter Lineargeschwindigkeit antreibt, die auf der Basis des von der Einrichtung (36) zum Ermitteln der Datenübertragungsrate ausgegebenen Signals (REF) bestimmt wird.

8. Gerät nach einem der Ansprüche 1 bis 5, bei dem die Einrichtung (23 bis 25) zur Drehgeschwindigkeitssteuerung so betreibbar ist, daß sie das plattenförmige Aufzeichnungsmedium (11) während des Aufzeichnens einer oder mehrerer zeitsequentieller Daten mit unterschiedlichen Datenübertragungsraten mit konstanter Geschwindigkeit antreibt, wobei das Gerät Mittel aufweist zur Änderung der Anzahl der Daten-Bytes des in den einzelnen Sektoren des Aufzeichnungsmediums (11) aufzuzeichnenden Signals in Abhängigkeit von der Abtastfrequenz und der Wortlänge, die in den einzelnen Sektoren aufzuzeichnen sind.

9. Gerät nach einem der vorhergehenden Ansprüche, bei dem die Aufzeichnungssignal-Generatoreinrichtung (35) Mittel aufweist zum Bestrahlen des Aufzeichnungsmediums (11) mit einem Strahl elektromagnetischer Energie.

10. Gerät nach Anspruch 9, bei dem das plattenförmige Aufzeichnungsmedium (11) eine magneto-optische Platte ist, auf der die zeitsequentiellen Daten unter Verwendung eines Laserstrahls magneto-optisch aufgezeichnet werden.

11. Gerät nach Anspruch 9, bei dem das plattenförmige Aufzeichnungsmedium (11) ein Medium ist, auf dem zeitsequentielle Daten mit Hilfe eines Laserstrahls als eine Serie von Pits aufgezeichnet werden.

12. Verfahren zum Aufzeichnen eines Eingangssignals in einem oder mehreren Sektoren eines plattenförmigen Aufzeichnungsmediums (11) mit einer Mehrzahl von Sektoren, wobei das Verfahren die Verfahrensschritte aufweist:

Zuführen von zeitsequentiellen Daten mit einer von mehreren vorbestimmten Übertragungsraten,

Erzeugen eines Fehlerkorrekturcodes (ECC) für die zeitsequentiellen Daten zum Korrigieren eines in diesen zeitsequentiellen Daten möglicherweise auftretenden Fehlers,

Addieren des Fehlerkorrekturcodes (ECC) zu den zeitsequentiellen Daten,

Umwandeln (35) der zeitsequentiellen Daten einschließlich des Fehlerkorrekturcodes (ECC) in ein Aufzeichnungssignal zum Aufzeichnen in einem oder mehreren Sektoren des plattenförmigen Aufzeichnungsmediums (11),

Ermitteln (36) der Datenübertragungsrate der zugeführten zeitsequentiellen Daten und Drehen des plattenförmigen Aufzeichnungsmediums (11) in Abhängigkeit hiervon und

Aufzeichnen des Aufzeichnungssignals in einem oder mehreren Sektoren des plattenförmigen Aufzeichnungsmediums (11),

**dadurch gekennzeichnet,**

daß die in den zeitsequentiellen Daten enthaltene Taktinformation aus den Daten extrahiert und die Übertragungsrate der zeitsequentiellen Daten auf der Basis der extrahierten Taktinformation ermittelt wird (36),

und daß ein für die Datenübertragungsrate kennzeichnendes Identifizierungssignal (ID) in einem zugewiesenen Verzeichnis in einem vorbestimmten Bereich des plattenförmigen Aufzeichnungsmediums (11) aufgezeichnet wird.

13. Verfahren nach Anspruch 12, bei dem der Verfahrensschritt des Aufzeichnens das Bestrahlen des plattenförmigen Aufzeichnungsmediums (11) mit einem Laserstrahl umfaßt, dessen Intensität mit dem Aufzeichnungssignal moduliert wird, wodurch die zeitsequentiellen Daten auf dem plattenförmigen Aufzeichnungsmedium (11) aufgezeichnet werden.

FIG. 1

EP 0 238 194 B1

*FIG. 2A*

| Sector 0 | Sector 1 | Sector 2 | | Sector n-1 | Sector n |
|----------|----------|----------|--|------------|----------|

*FIG. 2B*

| Pream-ble | ASYNC | ADD TA SA | ECC | ASYNC | ADD TA SA | ECC | GAP | Pream-ble | DSYNC | Data+ECC, etc. | GAP |
|-----------|-------|-----------|-----|-------|-----------|-----|-----|-----------|-------|----------------|-----|

|← Header →|← Data →|

EP 0 238 194 B1

## FIG. 3

## FIG. 4

17

## FIG. 5

| Time-sequential Data (Sampling Freq. x Word Length x Number of Channel) | Data Trans-mission Rate | Disc Rotational Speed |
|---|---|---|
| [1]   8 kHz x 8 bits x 48 | 3.072 Mbps | 1406 1/4 rpm |
| [2] 32 kHz x 8 bits x 12 | ″ | ″ |
| [3] 32 kHz x 16 bits x 6 | ″ | ″ |
| [4] 48 kHz x 16 bits x 4 | ″ | ″ |
| [5] 44.1 kHz x 16 bits x 4 | 2.8224 Mbps | 1406 1/4 x 441/480 |
| [6] 32 kHz x 12 bits x 8 | 3.072  Mbps | 1406 1/4 |
| [7] 44.1 kHz x 16 bits x 4 | 2.8224 Mbps | 1406 1/4 x 441/480 |
| [8] 8 kHz x 8 bits x 32 | 2.048  Mbps | 1406 1/4 x 2/3 |
| [9] 8 kHz x 8 bits x 24 | 1.536  Mbps | 1406 1/4 x 1/2 |
| [10] 8 kHz x 8 bits x 96 | 6.144  Mbps | 1406 1/4 x 2 |

EP 0 238 194 B1